# EUROPÄISCHE PATENTSCHRIFT

(11) **EP 3 815 522 B1**
(45) Veröffentlichungstag und Bekanntmachung des Hinweises auf die Patenterteilung: **17.08.2022**
(21) Anmeldenummer: 20203360.1
(22) Anmeldetag: 22.10.2020
(51) Int. Cl.: A01K 3/00, E04H 17/18, A01K 1/00

(54) **SICHERHEITSPANEL FÜR PFERDE**
SAFETY PANEL FOR HORSES
PANNEAU DE SÉCURITÉ POUR CHEVAUX

(30) Priorität: 29.10.2019 DE 202019105990 U; 19.11.2019 DE 202019106427 U
(43) Veröffentlichungstag der Anmeldung: 05.05.2021
(73) Patentinhaber: PATURA KG, 63925 Laudenbach (DE)
(72) Erfinder: ALLIÉ, Bernd, 63925 Laudenbach (DE)
(74) Vertreter: Herrmann, Uwe

(56) Entgegenhaltungen:
- EP-A1- 2 826 365
- CA-A1- 2 757 583
- US-A1- 2004 188 667
- Dr. Zeitler-Feicht Margrit H. ET AL: "Leitlinien zur Beurteilung von Pferdehaltungen unter Tierschutzgesichtspunkten", , 9. Juni 2009 (2009-06-09), Seiten 1-31, XP055778231, 53107 Bonn Gefunden im Internet: URL:https://www.bmel.de/SharedDocs/Downloa ds/DE/_Tiere/Tierschutz/Gutachten-Leitlini en/HaltungPferde.pdf?__blob=publicationFil e&v=3 [gefunden am 2021-02-22]

## Beschreibung

Die vorliegende Erfindung betrifft ein Panel gemäß dem Oberbegriff des Anspruchs 1.

Panels wie aus der EP2826365 A1 bekannt sind Elemente, z.B. aus geschweißten Stahlrohren, die in der Rinder- und Pferdehaltung zur vorrübergehenden Abgrenzung der Tiere geeignet sind. Das äußerst geringe Gewicht, die gute Handlichkeit und trotzdem ausreichende Stabilität in Verbindung mit dem günstigen Preis sorgen für eine weite Verbreitung der Gitter. Als Folge werden Panels teilweise auch für eine stationäre Unterbringung von Tieren verwendet.

Grundsätzlich weisen Panels Gitter aus mehreren horizontalen Streben / Rohren auf, die in regelmäßigen Abständen übereinander angeordnet und mittels vertikaler Streben verschweißt sind.

Übliche Höhen eines Panels liegen zwischen ca. 1,35 m und 1,85 m. Gängige Abstände zwischen den Querstreben / Rohren liegen bei ca. 20 cm.

Speziell im Bereich der Unterbringung von Pferden sind diese Rohrabstände von ca. 20 cm als gefährlich anzusehen, da die Verwendung derartiger Panels schon mehrfach zu Unfällen und Verletzungen bei Pferden geführt hat.

Speziell beim Wälzen der Tiere in unmittelbare Nähe zu den Panels können die Tiere mit ihren Gliedmaßen zwischen die Querstreben im unteren Bereich der Gitter gelangen. Beim Aufstehen oder wenn sich die Tiere festgeklemmt haben, kommt es häufig zu schweren Verletzungen der Tiere.

Deshalb sind in einschlägigen Empfehlungen für die Pferdehaltung, wie sie z.B. von der Reiterlichen Vereinigung (FN) herausgegeben werden, Gitterabstände zwischen 5 und 30 cm als nicht pferdekonform und somit nicht zur Pferdehaltung geeignet aufgelistet.

Der vorliegenden Erfindung liegt die Aufgabe zugrunde, die Nachteile des Stands der Technik abzumildern oder ganz zu beheben. Konkret liegt der vorliegenden Erfindung die Aufgabe zugrunde, ein Panel bereitzustellen, welches für die sichere Eingrenzung und Unterbringung von Pferden geeignet ist.

Diese Aufgabe wird durch ein Panel gemäß Anspruch 1 gelöst. Weitere vorteilhafte Weiterbildungen der Erfindung sind Gegenstand der Unteransprüche.

Ein erfindungsgemäßes Panel für Pferde weist einen vorzugsweise rechteckigen Rahmen und eine Mehrzahl von in dem Rahmen angeordneten Querstreben auf, wobei in einem ersten Bereich des Panels der Abstand zwischen den einzelnen Querstreben maximal 5 cm beträgt und in einem zweiten Bereich des Panels der Abstand zwischen den einzelnen Querstreben im Bereich zwischen ca. 30 cm und ca. 80 cm liegt.

Der Kern der Erfindung liegt herbei darin, die Abstände der Querstreben derart anzupassen, dass eine Verletzungsgefahr der Pferde minimiert wird.

Im unteren Bereich (erster Bereich), vorzugsweise bis auf eine Höhe von ca. 50 cm, betragen die Gitterabstände maximal 5 cm. Hierdurch ist es nicht mehr möglich, dass die Pferde beim Wälzen oder auch anderweitig mit ihren Extremitäten zwischen die Stäbe/ Querstreben gelangen können.

In anderen Worten erstreckt sich der erste Bereich vorzugsweise zwischen ca. 30 cm und 80 cm, vorzugsweise zwischen ca. 40 cm und ca. 70 cm, insbesondere zwischen ca. 45 cm und ca. 60 cm, besonders zwischen ca. 45 cm und ca. 55 cm ausgehend von einem ersten Ende des Rahmens hin zu einem zweiten, dem ersten Ende entgegengesetzten, Ende.

Vorzugsweise liegt in dem ersten Bereich des Panels der Abstand zwischen den einzelnen Querstreben vorzugsweise zwischen ca. 0,5 cm und 5 cm, vorzugsweise zwischen ca. 1 cm und ca. 4,5 cm, insbesondere zwischen ca. 2 cm und ca. 4 cm oder zwischen ca. 3 cm und ca. 4,5 cm.

Im oberen Bereich (zweiter Bereich) sind die Gitterabstände auf über 30 cm festgelegt. Hierdurch ist es möglich, dass ein Pferd, sollte es zwischen die Rohre kommen, problemlos wieder zurückweichen kann.

In anderen Worten liegt in dem zweiten Bereich des Panels der Abstand zwischen den einzelnen Querstreben vorzugsweise zwischen ca. 30 cm und 75 cm, vorzugsweise zwischen ca. 35 cm oder ca. 40 cm und ca. 70cm, insbesondere zwischen ca. 40 cm und ca. 55 cm oder zwischen ca. 55 cm und ca. 70 cm.

Erfindungsgemäße Panels können aufgrund der besonderen Anordnung der Querstreben ohne Einschränkungen für die vorrübergehende oder auch längerfristige Unterbringung von Pferden empfohlen werden. Tierhalter, die Boxen für Pferde vermieten, gehen somit haftungsrechtlich kein Risiko mehr ein, da Sie nicht gegen einschlägige Empfehlungen verstoßen

Weiterhin hat es sich in der Praxis als vorteilhaft herausgestellt, wenn das Panel Standelemente aufweist, auf denen das Panel aufstellbar ist, und der erste Bereich näher bei den Standelementen angeordnet ist als der zweite Bereich. In anderen Worten ist der erste Bereich vorzugsweise der untere Bereich des Panels.

Vorzugsweise sind die Standelemente derart ausgeführt, dass, wenn das Panel mittels der Standelemente aufgestellt ist, eine Lücke zwischen der untersten Querstrebe und dem Boden weniger als 5 cm beträgt, sodass keine Gefahr besteht, dass sich ein Pferd mit seinen Extremitäten in der Lücke zwischen Panel und Boden verfängt.

Vorzugsweise sind der Rahmen und die Querstreben aus Metall, insbesondere aus Stahl, gefertigt.

Weiterhin können an einem erfindungsgemäßen Panel Verbindungselemente, insbesondere in Form von Ketten oder Bügeln vorgesehen sein, mittels welcher das Panel mit anderen Panels lösbar verbindbar ist.

Weiterhin hat es sich als vorteilhaft erwiesen, wenn der Rahmen und die Querstreben aus vorzugsweise miteinander verschweißten Hohlrohren gefertigt sind. Dies ermöglicht die Fertigung von besonders leichten Panels.

Weitere Vorteile, Merkmale und Effekte der vorliegenden Erfindung ergeben sich aus der nachstehenden Beschreibung eines Ausführungsbeispiels unter Bezugnahme auf die zugehörigen Figuren. Gleiche oder ähnliche Bauteile sind hierbei mit denselben Bezugszeichen bezeichnet. Hierbei zeigt:
Fig. 1 ein herkömmliches Panel;
Fig. 2 ein erfindungsgemäßes Panel;
Fig. 3 ein anderes erfindungsgemäßes Panel, welches zusätzlich ein Abschirmungselement aufweist, welches verhindert, dass sich Tiere an den möglicherweise scharfkantigen Verbindungselementen verletzen.

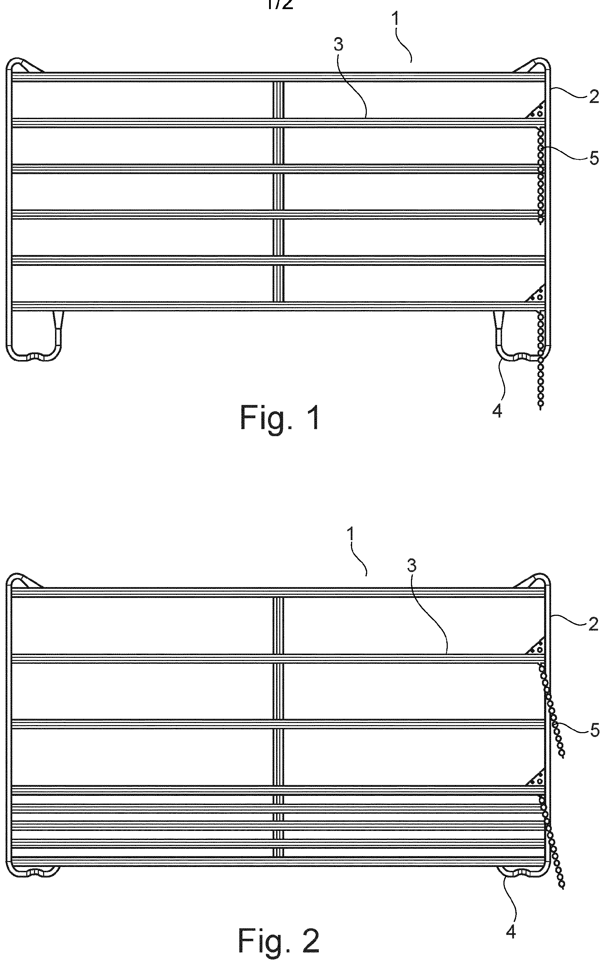

Das in Fig. 1 gezeigte herkömmliche Panel 1 weist einen rechteckigen Rahmen 2 und mehrere in dem Rahmen 2 angeordnete Querstreben 3 auf. Der Abstand der Querstreben 3 zueinander weist durchgängig und einheitlich ca. 20 cm auf.

Das in Fig. 2 gezeigte erfindungsgemäße Panel 1 weist einen rechteckigen Rahmen 2 und mehrere in dem Rahmen 2 angeordnete Querstreben 3 auf.

In einem ersten, unteren Bereich des Panels beträgt der Abstand zwischen den einzelnen Querstreben maximal 5 cm, hier beispielsweise 4 cm, und in einem zweiten, oberen Bereich des Panels beträgt der Abstand zwischen den einzelnen Querstreben mehr als 30 cm, hier beispielsweise 31 cm.

Das Panel weist Standelemente bzw. Füße 4 auf, mittels welcher das Panel 1 auf den Boden gestellt werden kann. Im Vergleich zu dem Panel auf Fig. 1 wird deutlich, dass erfindungsgemäß die Lücke zwischen dem Panel 1 bzw. der untersten Querstrebe 3 und dem Boden weniger als 5 cm, hier beispielsweise 4cm, beträgt.

Bei dem herkömmlichen Panel 1 aus Fig. 1 sind die Standelemente bzw. Füße 4 somit höher bzw. bilden eine größere Lücke zwischen dem Panel 1 und dem Boden.

Mittels Verbindungselementen, z.B. in Form von Ketten 5, sind einzelne Panels miteinander verbindbar.

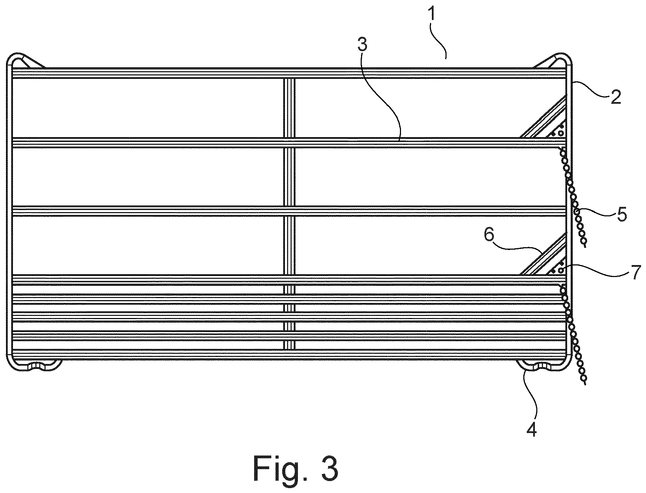

Wie in Fig. 3 gezeigt, kann ein erfindungsgemäßes Panel zusätzlich Abschirmungselemente 6 aufweisen, welches verhindert, dass sich Tiere an den möglicherweise scharfkantigen Verbindungselementen verletzen.

Gemäß einer Ausführungsform weisen die Panels Ketten 5 und entsprechende Verankerungselemente 7, vorzugsweise in Form von Blechbauteilen oder Dreiecksblechen auf, um einzelne Panels miteinander zu verbinden.

Die Verankerungselemente 7 können sehr scharfkantig sein. Um zu verhindern, dass sich Tiere, die mit ihren Extremitäten zwischen die Querstreben geraten, an den Verankerungselementen 7 verletzten, weist das Panel aus Fig. 3 Abschirmungselemente 6 auf, welche die Verankerungselemente 7 abschirmen und somit die Verletzungsgefahr minimieren.

In der in Fig. 3 gezeigten Ausführungsform sind die Abschirmungselemente 6 als diagonal verlaufende Streben ausgestaltet, welche jeweils parallel zu der die Hypotenuse bildenden Kante der in dieser Ausführungsform als Dreiecksbelche ausgebildeten Verankerungselemente 7 verlaufen.

In der in Fig. 3 gezeigten Ausführungsform sind die Abschirmungselemente 6 nur auf einer Seite (rechts in Fig. 3) des Panels vorgesehen, das Panel kann aber auch beidseitig mit Abschirmungselementen 6 ausgestattet sein.

Der Abstand zwischen einem jeden Abschirmungselement 6 und dem zugehörigen Verankerungselement 7 bzw. dessen Kante beträgt vorzugsweise maximal 5 cm und liegt besonders bevorzugt im Bereich zwischen ca. 1cm und ca. 5 cm.

## Patentansprüche

1. Panel (1) für Pferde, mit einem vorzugsweise rechteckigen Rahmen (2) und einer Mehrzahl von in dem Rahmen angeordneten Querstreben (3), **dadurch gekennzeichnet, dass** in einem unteren Bereich des Panels der Abstand zwischen den einzelnen Querstreben (3) maximal 5 cm beträgt und in einem oberen Bereich des Panels der Abstand zwischen den einzelnen Querstreben (3) mindestens ca. 30 cm beträgt und vorzugsweise im Bereich zwischen ca. 30 cm und ca. 80 cm liegt.

2. Panel (1) gemäß Anspruch 1, **dadurch gekennzeichnet, dass** in dem unteren Bereich des Panels (1) der Abstand zwischen den einzelnen Querstreben (3) zwischen ca. 0,5 cm und 5 cm, vorzugsweise zwischen ca. 1 cm und ca. 4,5 cm, insbesondere zwischen ca. 2 cm und ca. 4 cm oder zwischen ca. 3 cm und ca. 4,5 cm liegt.

3. Panel (1) gemäß Anspruch 1 oder 2, **dadurch gekennzeichnet, dass** in dem oberen Bereich des Panels (1) der Abstand zwischen den einzelnen Querstreben (3) zwischen ca. 30 cm und 75 cm, vorzugsweise zwischen ca. 40 cm und ca. 70cm, insbesondere zwischen ca. 40 cm und ca. 55 cm oder zwischen ca. 55 cm und ca. 70 cm liegt.

4. Panel (1) gemäß einem der vorhergehenden Ansprüche, **dadurch gekennzeichnet, dass** das Panel (1) Standelemente (4) aufweist, auf denen das Panel (1) aufstellbar ist, und der untere Bereich näher bei den Standelementen (4) angeordnet ist als der obere Bereich.

5. Panel (1) nach Anspruch 4, **dadurch gekennzeichnet, dass** die Standelemente (4) derart ausgeführt sind, dass, wenn das Panel (1) mittels der Standelemente (4) aufgestellt ist, eine Lücke zwischen der untersten Querstrebe und dem Boden weniger als 5 cm beträgt.

6. Panel (1) nach einem der vorhergehenden Ansprüche, **dadurch gekennzeichnet, dass** der Rahmen (2) und die Querstreben (3) aus Metall, insbesondere aus Stahl, gefertigt sind.

7. Panel (1) nach einem der vorhergehenden Ansprüche, **dadurch gekennzeichnet, dass** weiterhin Verbindungselemente (5) vorgesehen sind, mittels welcher das Panel (1) mit anderen Panels (1) lösbar verbindbar ist.

8. Panel (1) nach einem der vorhergehenden Ansprüche, **dadurch gekennzeichnet, dass** der Rahmen (2) und die Querstreben (3) aus vorzugsweise miteinander verschweißten Hohlrohren gefertigt sind.

9. Panel (1) nach einem der vorhergehenden Ansprüche, **dadurch gekennzeichnet, dass** sich der untere Bereich zwischen ca. 30 cm und 80 cm, vorzugsweise zwischen ca. 40 cm und ca. 70 cm, insbesondere zwischen ca. 45 cm und ca. 60 cm, besonders zwischen ca. 45 cm und ca. 55 cm ausgehend von einem ersten Ende des Rahmens (2) hin zu einem zweiten, dem ersten Ende entgegengesetzten, Ende erstreckt.

10. Panel (1) nach einem der vorhergehenden Ansprüche, **dadurch gekennzeichnet, dass** weiterhin Abschirmelemente (6) vorgesehen sind, mittels welcher Verbindungselemente (5) zum Verbinden mehrere Panels miteinander und / oder den Verbindungselementen (5) zugehörige Verankerungselemente (7) abgeschirmt werden.

## Claims

1. Panel (1) for horses, comprising a preferably rectangular frame (2) and a plurality of cross struts (3) arranged in the frame, **characterised in that** in a lower region of the panel the distance between the individual cross struts (3) is at most 5 cm and in an upper region of the panel the distance between the individual cross struts (3) is at least approx. 30 cm and is preferably in the range between approx. 30 cm and approx. 80 cm.

2. Panel (1) according to claim 1, **characterised in that** in the lower region of the panel (1) the distance between the individual cross struts (3) is between approx. 0.5 cm and 5 cm, preferably between approx. 1 cm and approx. 4.5 cm, in particular between approx. 2 cm and approx. 4 cm or between approx. 3 cm and approx. 4.5 cm.

3. Panel (1) according to claim 1 or 2, **characterised in that** in the upper region of the panel (1) the distance between the individual cross struts (3) is between approx. 30 cm and 75 cm, preferably between approx. 40 cm and approx. 70 cm, in particular between approx. 40 cm and approx. 55 cm or between approx. 55 cm and approx. 70 cm.

4. Panel (1) according to any one of the preceding claims, **characterised in that** the panel (1) has stand elements (4) on which the panel (1) can be positioned, and the lower region is arranged closer to the stand elements (4) than the upper region.

5. Panel (1) according to claim 4, **characterised in that** the stand elements (4) are designed such that when the panel (1) is positioned using the stand elements (4), a gap between the lowest cross strut and the ground is less than 5 cm.

6. Panel (1) according to any one of the preceding claims, **characterised in that** the frame (2) and the cross struts (3) are made of metal, in particular steel.

7. Panel (1) according to any one of the preceding claims, **characterised in that** connecting elements (5) are further provided, by means of which the panel (1) can be detachably connected to other panels (1).

8. Panel (1) according to any one of the preceding claims, **characterised in that** the frame (2) and the cross struts (3) are made of hollow tubes that are preferably welded together.

9. Panel (1) according to any one of the preceding claims, **characterised in that** the lower region extends between approx. 30 cm and 80 cm, preferably between approx. 40 cm and approx. 70 cm, in particular between approx. 45 cm and approx. 60 cm, particularly between approx. 45 cm and approx. 55 cm, starting from a first end of the frame (2) to a second end opposite the first end.

10. Panel (1) according to any one of the preceding claims, **characterised in that** shielding elements (6) are further provided, by means of which connecting elements (5) for connecting a plurality of panels to one another and/or anchoring elements (7) associated with the connecting elements (5) are shielded.

## Revendications

1. Panneau (1) pour chevaux, avec un cadre (2) de préférence rectangulaire et une multitude de barres transversales (3) disposées dans le cadre, **caractérisé en ce que** la distance entre les diverses barres transversales (3) est, dans une zone inférieure du panneau, de 5 cm au maximum et la distance entre les diverses barres transversales (3) est, dans une zone supérieure du panneau, d'au moins environ 30 cm et est comprise de préférence dans la plage entre environ 30 cm et environ 80 cm.

2. Panneau (1) selon la revendication 1, **caractérisé en ce que** la distance entre les diverses barres transversales (3) est comprise, dans la zone inférieure du panneau (1), entre environ 0,5 cm et 5 cm, de préférence entre environ 1 cm et environ 4,5 cm, en particulier entre environ 2 cm et environ 4 cm ou entre environ 3 cm et environ 4,5 cm.

3. Panneau (1) selon la revendication 1 ou 2, **caractérisé en ce que** la distance entre les diverses barres transversales (3) est comprise, dans la zone supérieure du panneau (1), entre environ 30 cm et 75 cm, de préférence entre environ 40 cm et environ 70 cm, en particulier entre environ 40 cm et environ 55 cm ou entre environ 55 cm et environ 70 cm.

4. Panneau (1) selon l'une quelconque des revendications précédentes, **caractérisé en ce que** le panneau (1) présente des éléments de support (4), sur lesquels le panneau (1) peut être placé et la zone inférieure est disposée davantage à proximité des éléments de support (4) que la zone supérieure.

5. Panneau (1) selon la revendication 4, **caractérisé en ce que** les éléments de support (4) sont réalisés de telle manière que lorsque le panneau (1) est placé au moyen des éléments de support (4), un interstice entre la barre transversale la plus basse et le sol est inférieur à 5 cm.

6. Panneau (1) selon l'une quelconque des revendications précédentes, **caractérisé en ce que** le cadre (2) et les barres transversales (3) sont fabriqués à partir de métal, en particulier à partir d'acier.

7. Panneau (1) selon l'une quelconque des revendications précédentes, **caractérisé en ce que** sont prévus par ailleurs des éléments de liaison (5), au moyen desquels le panneau (1) peut être relié de manière amovible à d'autres panneaux (1).

8. Panneau (1) selon l'une quelconque des revendications précédentes, **caractérisé en ce que** le cadre (2) et les barres transversales (3) sont fabriqués à partir de préférence de tuyaux creux soudés les uns aux autres.

9. Panneau (1) selon l'une quelconque des revendications précédentes, **caractérisé en ce que** la zone inférieure s'étend entre environ 30 cm et 80 cm, de préférence entre environ 40 cm et environ 70 cm, en particulier entre environ 45 cm et environ 60 cm, en particulier entre environ 45 cm et environ 55 cm en partant d'une première extrémité du cadre (2) vers une deuxième extrémité opposée à la première extrémité.

10. Panneau (1) selon l'une quelconque des revendications précédentes, **caractérisé en ce que** sont prévus par ailleurs des éléments de protection (6), au moyen desquels des éléments de liaison (5) destinés à relier plusieurs panneaux entre eux et/ou des éléments d'ancrage (7) associés aux éléments de liaison (5) sont protégés.
